Europäisches Patentamt

European Patent Office

Office européen des brevets

(19)

(11) Publication number: **0 118 976**
A1

(12)     **EUROPEAN PATENT APPLICATION**

(21) Application number: **84300426.8**

(22) Date of filing: **25.01.84**

(51) Int. Cl.³: **B 61 H 5/00**
**B 61 C 9/50, B 61 F 3/04**

(30) Priority: **10.02.83 GB 8303755**

(43) Date of publication of application:
**19.09.84 Bulletin 84/38**

(84) Designated Contracting States:
**DE FR**

(71) Applicant: **LUCAS INDUSTRIES public limited company**
**Great King Street**
**Birmingham, B19 2XF(GB)**

(72) Inventor: **Mortimer, William Alan**
**35 Lightwoods Hill Bearwood**
**Warley West Midlands B67 5DZ(GB)**

(72) Inventor: **Adamson, John**
**"Melwood" 16 Oldfield Way**
**Heswall Merseyside(GB)**

(72) Inventor: **Tickle, Colin John Frederick**
**"April House" 15 Stonewalls Burton**
**Rossett Clwyd, LLK2 0LG, Wales(GB)**

(74) Representative: **Spall, Christopher John et al,**
**BARKER, BRETTELL & DUNCAN 138 Hagley Road**
**Edgbaston Birmingham B16 9PW(GB)**

(54) Disc brakes for rail vehicles.

(57) In a disc brake (26) for a rail vehicle a rotatable disc (25) is fast with a shaft (22) driven by a traction motor (20) by which an axle (6) is driven through transmission means, and friction members (29) for engagement with opposite faces of the disc (25) are carried from the housing (21) of the traction motor (20).

FIG.1

Croydon Printing Company Ltd.

1

# DISC BRAKES FOR RAIL VEHICLES

This invention relates to disc brakes for rail vehicles of the kind in which pairs of spaced rail engaging wheels are rotatable with driven axles with which they are fast, and the driven axles are journalled at opposite ends for rotation in bearings carried by side frames, the driven axles being arranged for relative articulation to allow free movement of the vehicle through curves in the railway track, and the disc brake comprising a rotatable disc associated with one of the axles, and friction members for engagement with opposite faces of the disc in order to brake the disc and the axle with which the disc is associated.

In the case of rail vehicles of the kind set forth having driven axles difficulty is experienced in mounting the brake in such a manner that the performance of the brake is not affected by the articulation of the relative parts.

According to one aspect of our invention in a disc brake for a rail vehicle of the kind set forth the disc is fast with a shaft driven by a traction motor by which the axle is driven through transmission means.

Conveniently the disc is mounted directly on the armature shaft of the motor. However, in a modification, the disc is mounted on an extension of the armature shaft. In such a modification, the extension may be coupled to the armature shaft by means of a flexible drive.

Mounting the disc on a shaft driven by the traction motor ensures that the disc will be driven at a faster speed than that at which it would be driven if mounted on the axle itself. A lighter brake for a given duty can therefore be provided since the relatively faster speed of the disc enables the required torque to be generated at the wheel for a reduced brake-applying force at the disc and the disc heat dissipation is improved.

The ratio of a gear drive between the traction motor and the axle results in relatively low braking forces being generated at the disc for both service and parking braking.

According to another aspect of our invention in a disc brake for a rail vehicle of the kind set forth the friction members are carried from a housing of a traction motor by which the axle is driven through transmission means.

When the brake comprises a pair of caliper levers which carry the friction members, the levers are pivotally mounted with respect to the housing from which an actuator for the levers is also carried.

Conveniently the levers and the actuator are mounted in a bracket, and the bracket itself is mounted on a rigid extension from the housing.

In a construction in which the disc is fast with a shaft driven from the traction motor, arranging for the brake itself to be carried from the housing of the motor eliminates relative movement between the disc and the brake, and the performance of the brake is not affected by relative articulation of the driven axles.

When the brake is installed in a bogie of the steerable type with the bearings in which the axles are journalled being resiliently carried by the side frames, the ability of the bogie to steer will be substantially unaffected when the motor mounted brake is applied.

The installation of the brake is therefore facilitated since the mounting and the disc are carried by components which are restrained against relative bodily movement.

Thus any convenient brake actuator can be used to operate the brake, suitably by separating the outer ends of the pair of caliper levers which carry the friction members at their inner ends. This is because no compensation has to be made for relative bodily movement between the mounting for the friction members and the disc.

One embodiment of our invention is illustrated in the accompanying drawings in which:-

Figure 1 is a plan of a schematic layout of a twin-axle driven bogie incorporating disc brake installations;

Figure 2 is a practical version, on an enlarged scale, of a portion of the layout of Figure 1;

Figure 3 is a side view of the portion of the bogie shown in Figure 2; and

Figure 4 is an end view of one of the brakes showing a modification.

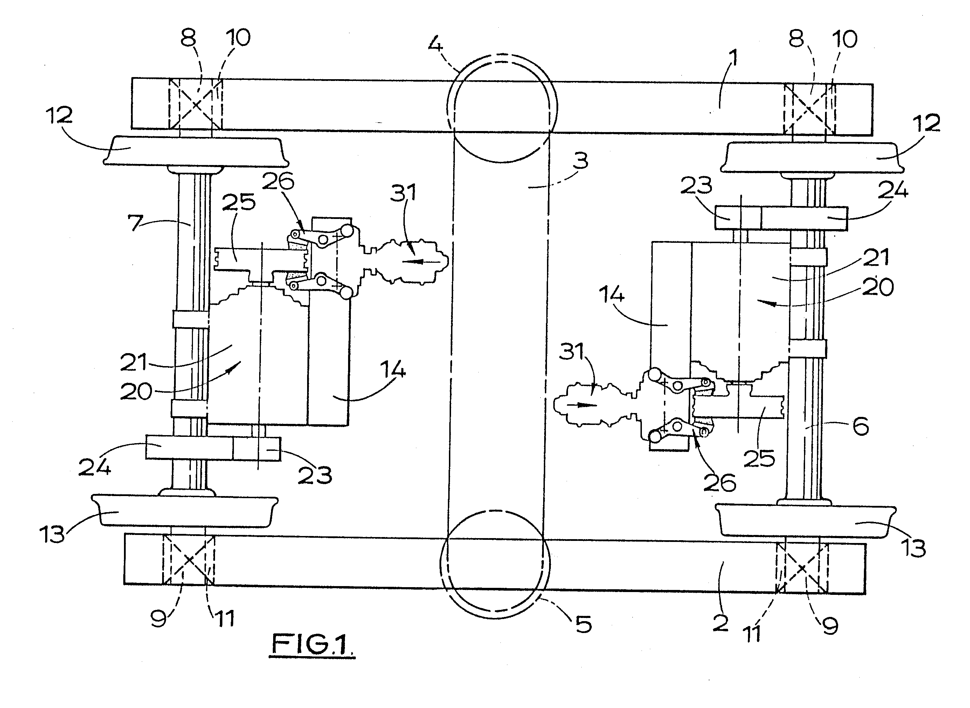

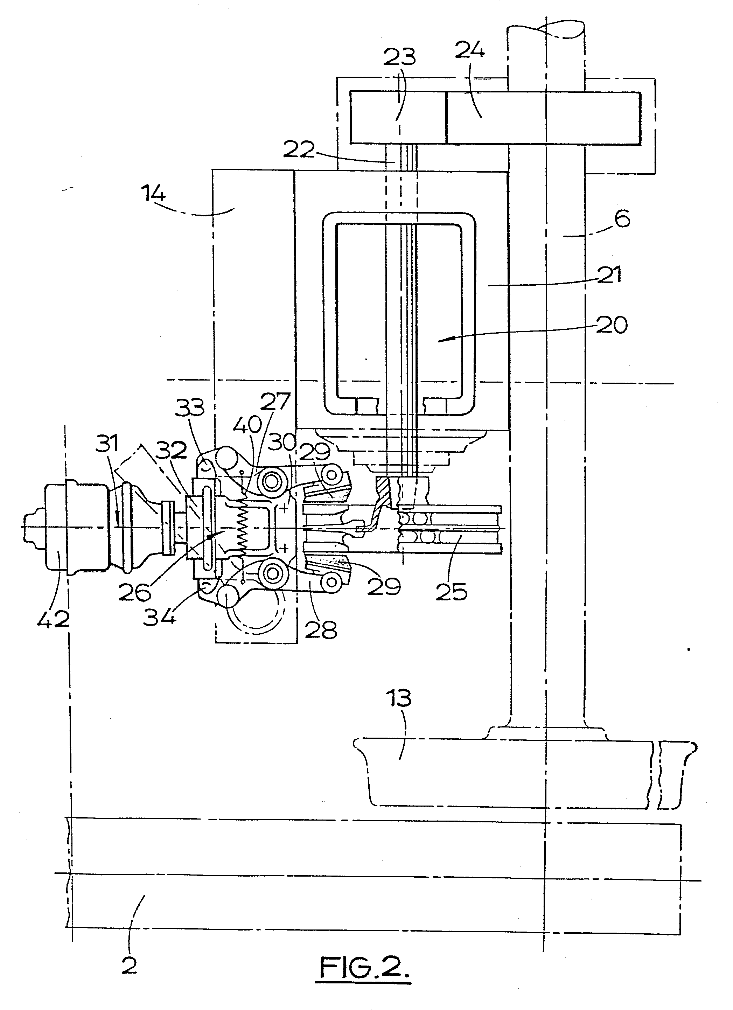

The twin-axle drivable bogie for a rail vehicle illustrated in Figures 1 to 3 of the drawings comprises side frames 1, 2 which are interconnected by a transverse bolster 3 and resilient suspension assemblies, suitably in the form of springs 4 and 5, are provided between opposite ends of the bolster 3 and the side frame 1, 2. Axles 6 and 7 are journalled for rotation at opposite ends in axle boxes 8, 9 containing bearings, and the axles boxes, in turn, are carried from the side frames 1, 2 through resilient suspension assemblies 10, 11, for example coil-springs or rubber blocks.

A pair of wheels 12, 13 inboard of each frame are fast with each axle 6, 7.

Each axle 6, 7 is driven by an electric motor 20 of which the housing 21 is carried by the respective axle 6, 7. The armature shaft 22 of each electric motor carries at opposite ends a pinion 23 in meshing engagement with a gear wheel 24 fast with the adjacent axle 6, 7, and a brake disc 25 of the ventilated type.

Each disc 25 is adapted to be braked by a disc brake 26 of the caliper type. Each brake 26 comprises a pair of caliper levers 27, 28 which are pivotally connected at intermediate points in their lengths to a mounting bracket 30 on an extension 14 of the housing 21. At their inner ends the levers 27, 28 carry a pair of brake shoes 29 carrying friction linings for engagement with braking surfaces defined by opposite faces of the disc 25 and at their outer ends the levers 27, 28 are adapted to be separated by means of an actuator 31 of the double-acting type.

The actuator 31 comprises a housing 32 which is rigidly carried from the bracket 30 and of which the axis is normal to the axis of rotation of the disc 25. The actuator incorporates a wedge which is guided in the housing 32 for movement in a longitudinal direction and

5

acts between adjacent ends of a pair of tappets 33, 34. The tappets 33, 34 are guided in aligned transverse bores in the housing 32 and act at their outer ends between the outer ends of the levers 27, 28. The effective length of each tappet 33, 34 is adjustable, either manually or automatically, to maintain, at a substantial value, the braking clearances between the shoes 29 and the disc 25.

A return spring 40, suitably a tension spring, acts between the levers 27 and 28 adjacent to their outer ends in order to urge the tappets 33, 34 inwardly to maintain the desired braking clearances in the "brake-release" position of the brakes.

The wedge, in a known manner, is displaced longitudinally to apply the brake pneumatically for service braking by means of pneumatic pressure applied to a piston working in a cylinder 42 and, for parking or emergency braking, when the pneumatic pressure is not operative, the wedge is held in an advanced, brake-applying, position by means of a compression spring which acts on the wedge through the piston.

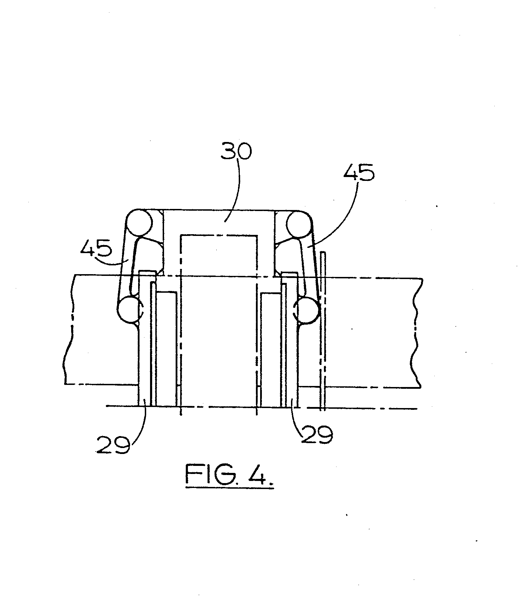

When the brakes are applied, either pneumatically or by the release of stored energy in the spring, the drag on the shoes 29 is transmitted to the extensions 14 through drag links 45 (Figure 4) which suspend from the bracket 30.

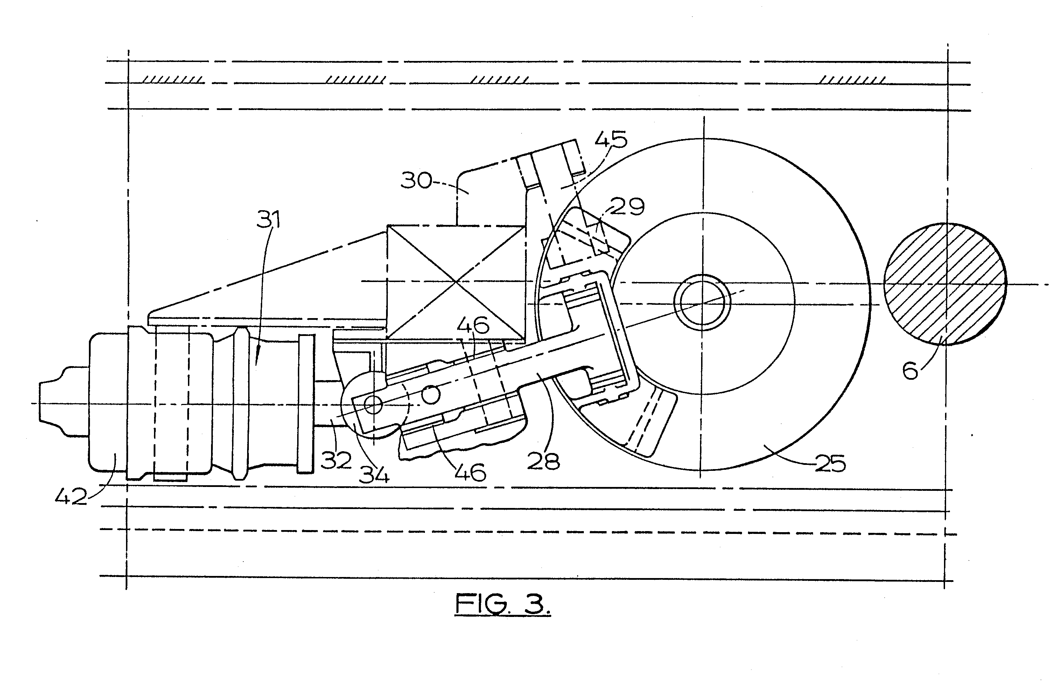

In a modification, shown in Figure 3, the drag-links 45 are omitted and the drag on the shoes 29 is taken by spaced surfaces 46 on the bracket 30 and with which the edges of the caliper levers 27 and 28 are engaged.

In the brake described above, a small amount of articulation is provided between the shoes 29 and the caliper levers 27 and 28 to permit the friction linings to be aligned with the disc 25. This feature forms the subject of our G.B. Patent No. 1 543 313. However, the friction linings will wear in a taper, so that the brake may be fitted with new linings of tapered outline which wear to a parallel sided worn outline.

In the modified construction of Figure 4 the levers 27 and 28 act on the shoes 29 through fully articulated connections, and similar connections are provided between the links 45 and the shoes. This enables the shoes to align themselves as necessary with the disc. Friction linings which are parallel sided can be fitted and will follow a parallel wear path.

In the construction described above the housing 31 can be orientated to any convenient angular position to facilitate installation provided the line of action of the tappets 33 and 34 remains substantially normal to the outer ends of the levers 27, 28.

CLAIMS

1. A disc brake for rail vehicles in which pairs of spaced rail engaging wheels (12,13) are rotatable with driven axles (6,7) with which they are fast, and the driven axles (6,7) are journalled at opposite ends for rotation in bearings (8,9) carried by side frames (1,2), the driven axles (6,7) being arranged for relative articulation to allow free movement of the vehicle through curves in the railway track, and the disc brake (26) comprising a rotatable disc (25) associated with one of the axles, and friction members (29) for engagement with opposite faces of the disc (25) in order to brake the disc and the axle with which the disc is associated characterised in that the disc (25) is fast with a shaft (22) driven by a traction motor (20) by which the axle is driven through transmission means.

2. A disc brake according to claim 1, characterised in that the disc (25) is mounted directly on the armature shaft of the motor.

3. A disc brake according to claim 1, characterised in that the disc (25) is mounted on an extension of the armature shaft of the motor.

4. A disc brake according to claim 3, characterised in that the extension is coupled to the armature shaft by means of a flexible drive.

5. A disc brake according to any preceding claim characterised in that the friction members (29) are carried from a housing (21) of the traction motor (20).

6. A disc brake according to claim 5, characterised in that the friction members (29) are carried by a pair of

8

caliper levers (27,28), and the levers are pivotally mounted with respect to the housing (21) from which an actuator (31) for the levers is also carried.

7.    A disc brake according to claim 6, characterised in that the levers (27,28) and the actuator (31) are mounted in a bracket (30), and the bracket itself is mounted on a rigid extension (14) from the housing (21).

FIG.1.

1/4

0118976

FIG.2.

FIG. 3

FIG. 4.

# EUROPEAN SEARCH REPORT

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 338 166 (THYSSEN) <br> * Page 3, line 28 - page 4, line 14; figure 1 * | 1,2 | B 61 H 5/00 <br> B 61 C 9/50 <br> B 61 F 3/04 |
| Y | DE-C- 558 980 (KIRCHNER) <br> * Page 2, lines 52-122; figures 1-3 * | 1,2 | |
| X | EP-A-0 013 895 (THYSSEN) <br> * Page 4, line 19 - page 5, line 30; figure 1 * | 1,5 | |
| A | DE-A-2 629 566 (WAGGONFABRIK UERDINGEN) <br> * Page 4, lines 7-21; figures 1,2 * | 1,5,6 | |
| A | GB-A- 806 760 (RHEINSTAHL) | | **TECHNICAL FIELDS SEARCHED (Int. Cl. ³)** |
| A | FR-A-2 033 215 (BROWN BOVERI) | | B 61 H 5/00 <br> B 61 H 15/00 <br> B 61 F 3/04 <br> B 61 F 5/44 <br> B 61 F 5/48 <br> B 61 C 9/48 <br> B 61 C 9/50 |
| D,A | DE-A-2 634 346 (GIRLING) | | |

The present search report has been drawn up for all claims

| Place of search | Date of completion of the search | Examiner |
|---|---|---|
| THE HAGUE | 17-05-1984 | HARTEVELD C.D.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82